# EUROPÄISCHE PATENTSCHRIFT

(11) **EP 1 174 016 B1**
(45) Veröffentlichungstag und Bekanntmachung des Hinweises auf die Patenterteilung: **27.04.2005**
(21) Anmeldenummer: 01116168.4
(22) Anmeldetag: 04.07.2001
(51) Int. Cl.: A01C 15/12

(54) **Streugerät**
Spreading device
Dispositif d'épandage

(30) Priorität: 18.07.2000 DE 10034797
(43) Veröffentlichungstag der Anmeldung: 23.01.2002
(73) Patentinhaber: Schmidt Holding GmbH, 70794 Filderstadt-Bonlanden (DE)
(72) Erfinder: Tielbeke, Andreas Hendrikes Antonius Maria, 8101 BJ Raalte (NL)
(74) Vertreter: Grättinger & Partner (GbR)

(56) Entgegenhaltungen:
- EP-A- 0 239 175
- FR-A- 2 652 835
- GB-A- 1 090 008

## Beschreibung

Die vorliegende Erfindung betrifft ein Streugerät zum Ausbringen von Streustoff, umfassend einen Streustoff-Vorratsbehälter, einen im Bodenbereich des Vorratsbehälters angeordneten, sich in Längsrichtung des Vorratsbehälters erstreckenden Bandförderer und eine austragsseitig angeordnete Dosiereinrichtung mit einem oberhalb des Bandförderers angeordneten, einen Abstand zum Förderband des Bandförderers einhaltenden Dosierschieber, wobei im Inneren des Vorratsbehälters entfernt von der Dosiereinrichtung oberhalb des Band-förderers mindestens eine Stauplatte vorgesehen ist, die eine untere Abstreifkante aufweist, welche beim Betrieb des Streugeräts zum Förderband einen geringeren Abstand einhält als der Dosierschieber.

Streugeräte, bei denen der Streustoff aus dem Vorratsbehälter durch einen im Bodenbereich angeordneten Brandförderer ausgetragen wird, sind in verschiedenen Ausführungen bekannt. Zum Stand der Technik zählen insbesondere die deutsche Patentschrift 3829624 sowie das US Patent 3559894. Die Bandförderer kommen dabei als Alternative zu den vielfach eingesetzten Schneckenförderern zum Einsatz. Sie beschicken jeweils eine rückseitig am Streugerät angeordnete Ausbringeinrichtung, die vielfach mindestens einen Streuteller umfaßt.

Bei Streugeräten, wie sie beispielsweise aus den vorstehend angegebenen Veröffentlichungen bekannt sind, läßt sich während des Streueinsatzes eine Verlagerung des Schwerpunktes nach hinten beobachten, die zu einer Beeinträchtigung der Fahreigenschaften des mit dem Streugerät ausgerüsteten Fahrzeugs führen kann. Um dieses Problem zu entschärfen wurde das gattungsgemäße, in der EP 0239175 A1 beschriebene Streugerät entwickelt.

Wenngleich dieses bekannte Streugerät im allgemeinen in zufriedenstellender Weise funktioniert und insbesondere im Hinblick auf die Schwerpunktsituation solchen Streugeräten, die keine Stauplatte aufweisen, überlegen ist, so erscheint dennoch das Problem der Schwerpunktverlagerung im Betrieb noch nicht in optimaler Weise gelöst. Im übrigen läßt sich auch bei dem aus der EP 0239175 A1 bekannten Streugerät unter ungünstigen Umständen die sog. "Brückenbildung" des Streustoffes im Vorratsbehälter beobachten, die ein Nachrutschen des Streustoffes nach unten zum Bandförderer hin beeinträchtigen oder gar verhindern kann. Das Phänomen der Brückenbildung ist bereits verschiedentlich beschrieben und erörtert worden, beispielsweise im deutschen Gebrauchsmuster 29911053, wobei in jener Druckschrift vorgeschlagen wird, oberhalb der als Schneckenförderer oder Bandförderer ausgeführten Fördereinrichtung ein in einer horizontalen Ebene oszillierendes Schneideelement anzuordnen.

Die vorliegende Erfindung zielt darauf ab, ein Streugerät der Eingangs genannten Art bereitzustellen, das sich durch ein gegenüber dem Stand der Technik verbessertes Betriebsverhalten auszeichnet, ohne daß hiermit ein hoher apparativer Aufwand verbunden ist.

Gemäß der vorliegenden Erfindung wird diese Aufgabe dadurch gelöst, daß sich die Abstreifkante der Stauplatte nur über einen Teil der wirksamen Breite des Förderbandes erstreckt. Maßgebliches Merkmal des erfindungsgemäßen Streugeräts ist mit anderen Worten, daß die mindestens eine oberhalb des Bandförderers angeordnete Stauplatte so dimensioniert bzw. ausgeführt ist, daß zumindest auf einer Seite neben der Abstreifkante oberhalb der wirksamen Breite des Förderbandes ein substantieller Durchtritt für Streustoff verbleibt. Unter "wirksamer" Breite des Förderbandes ist dabei die Breite desjenigen, durch seitliche Abdeckungen begrenzten Bereiches des Förderbandes zu verstehen, auf dem tatsächlich Streustoff transportiert wird.

Indem sich die dicht über dem Bandförderer verlaufende Abstreifkante nur über einen Teil der wirksamen Breite des Förderbandes, im Falle einer einzigen Stauplatte bevorzugt über 50 bis 75 % der wirksamen Breite des Förderbandes erstreckt, lassen sich auf überraschend einfache Weise die Funktion und das Betreibsverhalten des Streugeräts im Hinblick auf die Schwerpunktproblematik verbessern. Dies mag mit einer definierten Nachförderung des Streustoffes aus dem vorderen Bereich des Vorratsbehälters in dessen hinteren Bereich in Verbindung stehen. Die Abstreifkante der Stauplatte hält im Betrieb des Streugeräts einen gewissen, gegenüber dem Abstand des Dosierschiebers zum Förderband (je nach Streustoff ca. 2 bis 7 cm) geringeren Abstand zum Bandförderer ein, wobei dieser Abstand gegebenenfalls erst durch die vom Bandförderer über den zu fördernden Streustoff auf die Stauplatte übertragene Kraft hervorgerufen wird (siehe unten).

Je nach der spezifischen Ausführung und/oder Anordnung der mindestens einen Stauplatte kann ergänzend zu der Schwerpunktproblematik auch das Problem der Brückenbildung entscheidend gemindert werden(s. u.), wobei der apparative Mehraufwand des erfindungsgemäßen Streugeräts gegenüber dem Stand der Technik minimal ist. Hervorzuheben ist in diesem Zusammenhang, daß sich bestehende Streugeräte mit geringsten Kosten problemlos zu solchen nach der vorliegenden Erfindung umrüsten lassen.

Bei einer ersten bevorzugten Ausführungsform der Erfindung ist die mindestens eine Stauplatte bezogen auf den Bandförderer asymmetrisch angeordnet und/oder ausgeführt. In diesem Falle wirkt sich die mindestens eine Stauplatte dahingehend aus, daß der Streustoff dem Vorratsbehälter durch den Bandförderer asymmetrisch entzogen wird. Ist beispielsweise durch die Stauplatte der - in Fahrtrichtung gesehen - rechte Bereich des Bandförderers abgedeckt, so wird der Bandförderer in seinem linken Bereich mit Streustoff aus dem Bereich vor der Stauplatte und in seinem rechten Bereich mit Streustoff aus dem Bereich hinter der Stauplatte beladen. Hierdurch ergibt sich sowohl in dem Bereich vor der Stauplatte wie auch in dem Bereich hinter der Stauplatte innerhalb des Streustoffbehälters selbst dann, wenn dieser einen symmetrischen Querschnitt aufweist, jeweils eine asymmetrische Bewegung des zum Bandförderer nachrutschenden Streustoffs. Durch diese asymmetrische Nachrutschbewegung des Streustoffs kann es nicht zu einem die Brückenbildung begünstigenden symmetrischen Aufbau von Kräften innerhalb des nachrutschenden Streustoffs kommen.

Die vorstehend erläuterte asymmetrische Anordnung und/oder Ausführung der mindestens einen Stauplatte läßt sich, ohne daß dies zu grundsätzlich anderen Verhältnissen innerhalb des Streustoffvorratsbehälters führen würde, durchaus auf unterschiedliche konstruktive Weise realisieren. Zum einen kann eine - beispielsweise rechteckige - Stauplatte relativ zur Mitte des Förderbandes versetzt angeordnet sein. In gleicher Weise kommt beispielsweise in Betracht, daß sich zwar die mindestens eine Stauplatte über die gesamte Breite des Bandförderers, die dicht oberhalb des Förderbandes angeordnete Abstreifkante jedoch nur über einen außermittigen Teilbereich der Breite des Bandförderers erstreckt, wobei die mindestens eine Stauplatte benachbart der Abstreifkante einen Durchbruch aufweist. Auch in diesem Falle ergibt sich die oben beschriebene, vorteilhafte asymmetrische Nachrutschbewegung des Streustoffs zum Bandförderer. Durch die Dimensionierung der (asymmetrischen) Stauplatte läßt sich darüberhinaus der zweite vorstehend beschriebene Effekt, nämlich die Vermeidung der Schwerpunktverschiebung nach hinten, beeinflussen.

Im Rahmen der vorliegenden Erfindung ist die vorstehend erläuterte asymmetrische Anordnung und/oder Ausführung der mindestens einen Stauplatte jedoch keineswegs zwingend. Vielmehr ergibt sich auch bei einer symmetrisch angeordneten und ausgeführten Stauplatte eine Verbesserung des Betriebsverhaltens des Streugeräts gegenüber dem Stand der Technik, indem die nach hinten gerichtete Verlagerung des Schwerpunkts während des Streubetriebs weitestgehend unterbunden wird. Denn die gemäß der Erfindung ausgeführte Stauplatte verhindert unabhängig von der Beladung des Vorratsbehälters und von der Art des Streustoffs und von der aktuell eingestellten Höhe des Dosierschiebers über dem Förderband wirksam eine auf den vorderen Bereich des Vorratsbehälters beschränkte Entnahme von Streustoff aus dem Vorratsbehälter bzw. eine Mitnahme des gesamten in dem Vorratsbehälter bevorrateten Streustoffs zur Austragsseite hin, was sich insbesondere bei Streugeräten, die eine besonders große Erstreckung in Förderrichtung des Bandförderers aufweisen, als ein bedeutender Vorteil der Erfindung gegenüber dem Stand der Technik erweist.

Gemäß einer bevorzugten Weiterbildung der Erfindung kann die mindestens eine Stauplatte in verschiedenen Grundstellungen relativ zum Bandförderer eingestellt werden. Dies trägt dem Umstand Rechnung, daß in Abhängigkeit von dem jeweiligen Streustoff (Splitt, Salz, Dünger oder dergleichen) und der Breite des zu bestreuenden Streifens eine unterschiedlich starke Streustoffschicht auf dem Förderband aus dem Vorratsbehälter abzuziehen und der Ausbringeinrichtung (Streuteller oder dergleichen) zuzuführen ist. Die endgültige Dicke der mittels des Förderbandes aus dem Vorratsbehälter abgezogenen Streustoffschicht wird durch den Dosierschieber der Dosiereinrichtung bestimmt. Jedoch lassen sich die Auswirkungen der mindestens einen Stauplatte auf die Höhe des durch den Dosierschieber definierten Spalts abstimmen, um die Wirkungsweise des erfindungsgemäßen Streugeräts zu optimieren.

Eine andere bevorzugte Weiterbildung der Erfindung zeichnet sich dadurch aus, daß die Abstreifkante der mindestens einen Stauplatte im Betrieb des Streugeräts einen Abstand von mindestens 5mm zum Förderband einhält. Auf diese Weise wird ein unnötiger Verschleiß des Förderbands verhindert. Dabei ist von Bedeutung, daß der genannte Abstand jedenfalls im Betrieb des Streugeräts eingehalten wird. Dies bedeutet, daß bei Stillstand des Bandförderers und/oder bei leerem Vorratsbehälter die Stauplatte mit ihrer Abstreifkante durchaus auf dem Förderband aufliegen kann, sofern sichergestellt ist, daß bei gefülltem Vorratsbehälter und eingeschaltetem Bandförderer der von diesem mitgeförderte Streustoff die Stauplatte um ein solches Maß verformt und/oder anhebt, daß sich der vorstehend beschriebene Abstand der Abstreifkante zum Förderband einstellt. In diesem Sinne ist es von besonderem Vorteil, wenn die mindestens eine Stauplatte elastisch verformbar ist, beispielsweise indem sie aus Polyurethan besteht. In diesem Falle läßt sich die selbsttätige Einstellung des Abstands, den die Abstreifkante zum Förderband einhält, auf technisch besonders einfache Weise realisieren. Jedenfalls ist in diesem Falle mit der Realisierung der vorliegenden Erfindung ein geringerer Aufwand verbunden als im Falle derebenfalls möglichen - lageveränderbaren Lagerung der mindestens einen Stauplatte, beispielsweise indem diese über eine Lenkeranordnung, welche das Ausweichen der Stauplatte nach oben ermöglicht, aufgehängt ist.

Gemäß einer anderen bevorzugten Weiterbildung der Erfindung ist die mindestens eine Stauplatte relativ zur Förderrichtung des Bandförderers schräg gestellt. Dies gilt namentlich dann, wenn sich die Stauplatte insgesamt nur über einen Teil der Breite des Förderbandes erstreckt. Die Schrägstellung der mindestens einen Stauplatte ist geeignet, die Betriebssicherheit des erfindungsgemäßen Streugeräts zu steigern. Denn Verklumpungen, die größer sind als der zwischen der Abstreifkante der Stauplatte und dem Förderband bestehende Spalt, werden durch die Schrägstellung der Stauplatte an dieser vorbeigeleitet und können auf dem Förderband ausgetragen werden.

Die mindestens eine Stauplatte kann bevorzugt Durchtrittsöffnungen für den Streustoff aufweisen. Solche Durchtrittsöffnungen bewirken eine weitere Verbesserung des Betreibsverhaltens des Streugeräts im Hinblick auf die eingangs dargelegte Schwerpunktproblematik.

Eine wiederum andere bevorzugte Weiterbildung der Erfindnung zeichnet sich dadurch aus, daß die Stauplatte im Bereich der Abstreifkante dergestalt abgeschrägt ist, daß sich ein in Förderrichtung zulaufender keilförmiger Raum zwischen dem Förderband und der Stirnkante der Stauplatte ergibt. Eine solche Abschrägung der Stauplatte an ihrer unteren Stirnkante begünstigt insbesondere dann, wenn die Stauplatte elastisch verformbar ausgeführt ist, deren Ausweichen nach oben, um den optimalen Abstand der Abstreifkante zum Förderband einzustellen.

Was die optimalen Abmessungen der mindestens einen Stauplatte angeht, so hängen diese von verschiedenen Randbedingungen, beispielsweise von der Art des verwendeten Streustoffs ab. Im Falle von Streugeräten, die für den Winterdienst vorgesehen und zum Ausbringen von Splitt und/oder Salz ausgelegt sind, ist es besonders günstig, wenn in jenem Falle, daß genau eine Stauplatte vorgesehen ist, sich deren Abstreifkante über 50 bis 75% der wirksamen Breite des Bandförderers erstreckt. Sind demgegenüber mehrere Stauplatten vorgesehen, so ist das Maß von 50 bis 75% der wirksamen Breite des Förderbandes entsprechend auf die Anzahl der Stauplatten aufzuteilen.

Im folgenden wird die vorliegende Erfindung anhand der Zeichnung näher erläutert. Dabei zeigt
Fig. 1 in schematischer Seitenansicht ein erstes bevorzugtes Ausführungsbeispiel eines Streugeräts nach der vorliegenden Erfindung,
Fig. 2 das Streugerät gemäß Fig. 1 in Draufsicht,
Fig. 3 eine zweite bevorzugte Ausführungsform des erfindungsgemäßen Streugeräts in schematischer Draufsicht und
Fig. 4 im Querschnitt eine dritte bevorzugte Ausführungsform des erfindungsgemäßen Streugeräts.

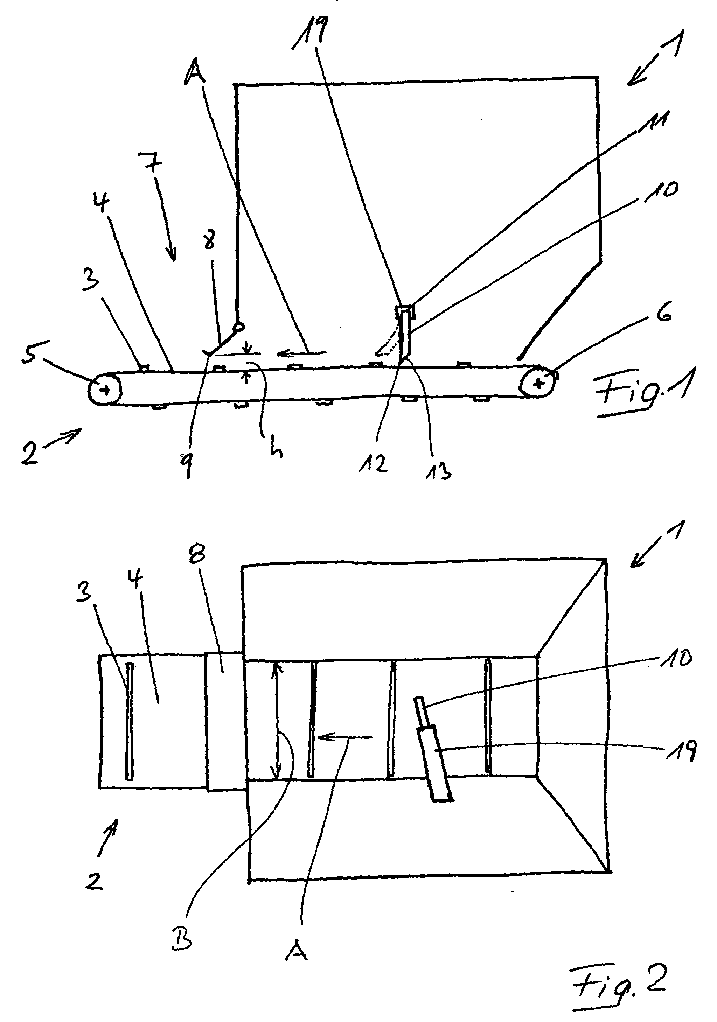

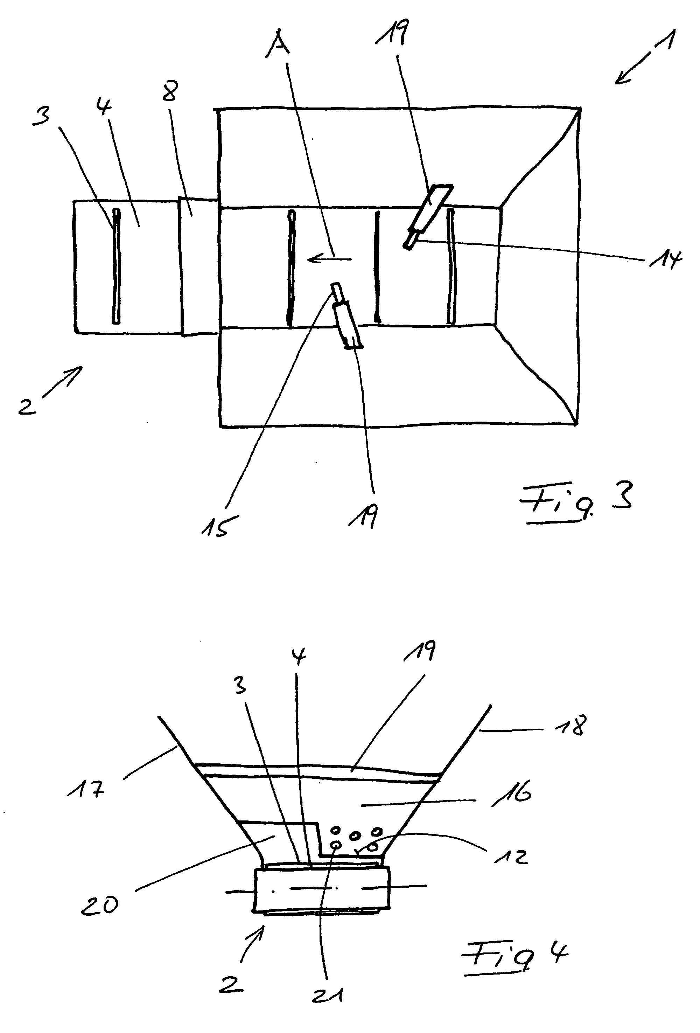

Das in den Figuren 1 und 2 veranschaulichte Streugerät umfaßt einen Streustoff-Vorratsbehälter 1 und einen im Bodenbereich des Vorratsbehälters angeordneten, sich in Längsrichtung des Vorratsbehälters erstreckenden Bandförderer 2. Der Bandförderer 2 umfaßt dabei in als solches bekannter Weise ein mit Rippen 3 bestücktes Endlosförderband 4, das um zwei Walzen 5, 6 umläuft, von denen mindestens eine motorisch angetrieben ist. Das obere Trum des Förderbands 4 wird jeweils von der Walze 6 zur Walze 5 bewegt, wodurch die Förderrichtung A zur Austragsseite hin vorgegeben wird. Austragsseitig ist eine Dosiereinrichtung 7 vorgesehen. Diese umfaßt einen Dosierschieber 8, dessen untere Kante 9 einen Abstand h vom Förderband 4 einhält. Der Abstand h der unteren Kante 9 des Dosierschiebers 8 zum Förderband 4 gibt dabei die Schichtstärke einer mittels des Bandförderers 2 aus dem Vorratsbehälter 1 abgezogenen Streustoffschicht vor.

In dem vorstehend beschriebenen Umfang entspricht das in den Figuren 1 und 2 veranschaulichte Streugerät dem hinlänglich bekannten Stand der Technik. Aus diesem Grunde wird an dieser Stelle auf detailliertere Erläuterungen verzichtet.

Etwa mittig, auf der Hälfte der axialen Länge des Vorratsbehälters 1 ist in dessen Innerem oberhalb des Bandförderers 2 eine Stauplatte 10 vorgesehen, die sich über etwa 65 bis 70% der wirksamen Breite B des Förderbandes 4 erstreckt. Die Stauplatte 10 besteht aus Polyurethan, so daß sie elastisch verformbar ist. Sie ist im Bereich ihrer oberen Kante 11 in einem Rahmen 19 fest eingespannt, wobei der Rahmen in verschiedenen Grundstellungen, die sich durch unterschiedliche Abstände zum Förderband 4 voneinander unterscheiden, festgelegt werden kann.

Die untere Kante der Stauplatte 10 ist als Abstreifkante 12 ausgeführt. In diesem Bereich ist die Stauplatte 10 dergestalt abgeschrägt, daß sich zwischen der Stauplatte 10 und dem Förderband 4 ein in Förderrichtung A keilförmig zulaufender Bereich ergibt. Die Stellung des Halteelements für die Stauplatte 10 ist so gewählt, daß letztere bei entleertem Vorratsbehälter 1 mit ihrer Abstreifkante 12 an dem Förderband 4 anliegt und gegen dieses elastisch vorgespannt ist. Aufgrund ihrer Elastizität verformt sich die Stauplatte 10 je nach der Art des in dem Vorratsbehälter 1 bevorrateten, mit dem Bandförderer 2 ausgetragenen Streustoffs mehr oder weniger stark, wodurch sich je nach Streustoff unterschiedliche Abstände der Abstreifkante 12 zum Förderband 4 einstellen. Die Position des Halteelements ist dabei so gewählt, daß sich im Falle von Salz ein Abstand von ca. 5mm einstellt, wohingegen sich im Falle von Splitt ein Abstand die Abstreifkante 12 zum Förderband 4 bis ca. 20mm einstellt.

Wie sich aus Fig. 2 ergibt, ist die Stauplatte 10 asymmetrisch angeordnet, indem sie den - in Förderrichtung A gesehen - linken Bereich des Förderbandes 4 vollständig abdeckt. Zu erkennen ist in Fig. 1 auch die Schrägstellung der Stauplatte 10 relativ zur Förderrichtung A des Bandförderers.

Das in Fig. 3 veranschaulichte Streugerät unterscheidet sich von demjenigen gemäß Fig. 1 im wesentlichen allein dadurch, daß statt einer Stauplatte 10 derer zwei vorgesehen sind. Diese beiden Stauplatten 14, 15 sind zueinander gestaffelt angeordnet, wobei die Stauplatte 14 den - in Förderrichtung A betrachtet - rechten Randbereich des Förderbands 4 und die Stauplatte 15 den linken Randbereich des Förderbands 4 abdeckt. Hinsichtlich der weiteren Merkmale entspricht das Streugerät und insbesondere die Stauplatte der vorstehend erläuterten Ausführungsform gemäß den Fig. 1 und 2, so daß zur Vermeidung von Wiederholungen auf die vorstehenden Ausführungen Bezug genommen wird.

Wie dies Fig. 4 veranschaulicht kann sich die Stauplatte 16 durchaus auch von einer Seitenwand 17 des Vorratsbehälters bis zur anderen Seitenwand 18 erstrecken. Die Abstreifkante 12 der Stauplatte, die beim Betrieb des Streugeräts einen geringen Abstand zum Förderband 4 einhält, erstreckt sich etwa über die Hälfte der wirksamen Breite des Förderbandes 4. Angrenzend an die Abstreifkante 12 weist die Stauplatte 16 einen Durchbruch 20 auf. Dessen Höhe entspricht etwa dem maximal möglichen Abstand h der Unterkante 9 des Dosierschiebers 8 zum Förderband 4. Die Stauplatte 16 weist in ihrem oberhalb der Abstreifkante 12 angeordneten Bereich Durchtrittsöffnungen 21 für den Streustoff auf.

Bei sämtlichen drei in der Zeichnung veranschaulichten Ausführungsformen des erfindungsgemäßen Streugeräts bewirkt/bewirken die Stauplatte(n) nicht nur eine nahezu konstante Schwerpunktlage des Streugeräts bei sich entleerendem Vorratsbehälter. Vielmehr ergibt sich durch die asymmetrische Anordnung (Fig. 1 bis 3) bzw. Ausführung (Fig. 4) der Stauplatte(n) eine asymmetrische Nachrutschbewegung des Streustoffs zum Förderband mit der Folge einer entscheidend reduzierten Neigung zur Brückenbildung innerhalb des Streustoffs. Wird auf den zuletzt genannten Vorteil verzichtet, so könnte beispielsweise die in Fig. 1 und 2 veranschaulichte Stauplatte 10 mittig zum Förderband 4 angeordnet sein, wobei in diesem Falle beidseits der Stauplatte ein Durchtritt für auf dem Förderband transportierten Streustoff von dem vorderen Bereich des Streustoffbehälters in dessen hinteren Bereich verbliebe.

## Patentansprüche

1. Streugerät zum Ausbringen von Streustoff, umfassend einen Streustoff-Vorratsbehälter (1), einen im Bodenbereich des Vorratsbehälters angeordneten, sich in Längsrichtung des Vorratsbehälters erstreckenden Bandförderer (2) und eine austragsseitig angeordnete Dosiereinrichtung (7) mit einem oberhalb des Bandförderers (2) angeordneten, einen Abstand (h) zum Förderband (4) des Bandförderers (2) einhaltenden Dosierschieber (8), wobei im Inneren des Vorratsbehälters (1) entfernt von der Dosiereinrichtung (7) oberhalb des Bandförderers (2) mindestens eine Stauplatte (10; 14, 15; 16) vorgesehen ist, die eine untere Abstreifkante (12) aufweist, welche beim Betrieb des Streugeräts zum Förderband (4) einen geringeren Abstand einhält als der Dosierschieber (8),
**dadurch gekennzeichnet,**
**daß** sich die Abstreifkante (12) nur über einen Teil der wirksamen Breite (B) des Förderbandes (4) erstreckt.

2. Streugerät nach Anspruch 1,
**dadurch gekennzeichnet,**
**daß** genau eine Stauplatte (10; 16) vorgesehen ist, deren Abstreifkante (12) sich über 50 bis 75% der wirksamen Breite des Förderbandes (4) erstreckt.

3. Streugerät nach Anspruch 1 oder Anspruch 2,
**dadurch gekennzeichnet,**
**daß** die Abstreifkante (12) im Betrieb des Streugeräts einen Abstand von mindestens 5mm zum Förderband (4) einhält.

4. Streugerät nach einem der Ansprüche 1 bis 3,
**dadurch gekennzeichnet,**
**daß** die mindestens eine Stauplatte (10; 14, 15; 16) in verschiedenen Grundstellungen relativ zum Bandförderer (2) eingestellt werden kann.

5. Streugerät nach einem der Ansprüche 1 bis 4,
**dadurch gekennzeichnet,**
**daß** die mindestens eine Stauplatte (10; 14, 15; 16) mit einer von der Beladung des Vorratsbehälters (1) unabhängigen Vorspannkraft in Richtung auf das Förderband (4) vorgespannt ist.

6. Streugerät nach einem der Ansprüche 1 bis 5,
**dadurch gekennzeichnet,**
**daß** die mindestens eine Stauplatte (10; 14, 15; 16) dergestalt verformbar und/oder lageveränderbar gelagert ist, daß sich die Stellung der Abstreifkante (12) relativ zum Förderband (4) in Abhängigkeit von der von dem geförderten Streustoff auf die Stauplatte (10; 14, 15; 16) ausgeübten Kraft ändert.

7. Streugerät nach Anspruch 6,
**dadurch gekennzeichnet,**
**daß** die mindestens eine Stauplatte (10; 14, 15; 16) elastisch verformbar ist.

8. Streugerät nach einem der Ansprüche 1 bis 7,
**dadurch gekennzeichnet,**
**daß** die mindestens eine Stauplatte (10; 14, 15) relativ zur Förderrichtung des Bandförderers schräggestellt ist.

9. Streugerät nach einem der Ansprüche 1 bis 8,
**dadurch gekennzeichnet,**
**daß** die mindestens eine Stauplatte (10; 14, 15; 16) im Bereich der Abstreifkante (12) abgeschrägt ist.

10. Streugerät nach einem der Ansprüche 1 bis 9,
**dadurch gekennzeichnet,**
**daß** die mindestens eine Stauplatte (10; 14, 15; 16) bezogen auf den Bandförderer (2) asymmetrisch angeordnet und/oder ausgeführt ist.

11. Streugerät nach Anspruch 10,
**dadurch gekennzeichnet,**
**daß** sich die mindestens eine Stauplatte (16) über die gesamte Breite (b) des Bandförderers (2) erstreckt, wobei sie benachbart der Abstreifkante (12) einen Durchbruch (20) aufweist.

12. Streugerät nach einem der Ansprüche 1 bis 11,
**dadurch gekennzeichnet,**
**daß** die mindestens eine Stauplatte (16) Durchtrittsöffnungen (21) aufweist.

## Claims

1. A spreading device for bringing out spreading material, comprising a spreading material storage container (1), a belt conveyor (2) arranged in the bottom area of the storage container and extending in the longitudinal direction of the storage container and a metering device (7) arranged at the discharge side with a metering slide gate (8) arranged above the belt conveyor (2) and maintaining a distance (h) from the conveyor belt (4) of the belt conveyor (2), whereby at least one baffle plate (10; 14, 15; 16) is provided inside the storage container (1) above the belt conveyor (2) at a distance from the metering device (7), which baffle plate has a lower stripping edge (12) which, during operation of the spreading device, maintains a smaller distance from the conveyor belt (4) than the metering slide gate (8),
**characterised in that**
the stripping edge (12) extends only over a part of the effective width (B) of the conveyor belt (4).

2. The spreading device according to claim 1,
**characterised in that**
precisely one baffle plate (10; 16) is provided, whose stripping edge (12) extends over 50 to 75 % of the effective width of the conveyor belt (4).

3. The spreading device according to claim 1 or claim 2,
**characterised in that**
the stripping edge (12) maintains a distance of at least 5 mm from the conveyor belt (4) during the operation of the spreading device.

4. The spreading device according to any one of claims 1 to 3,
**characterised in that**
the at least one baffle plate (10; 14, 15; 16) can be adjusted in various basic positions relative to the belt conveyor (2).

5. The spreading device according to any one of claims 1 to 4,
**characterised in that**
the at least one baffle plate (10; 14, 15; 16) is pretensioned with a pretensioning force in the direction of the conveyor belt (4), said pretensioning force being independent of the loading of the storage container (1).

6. The spreading device according to any one of claims 1 to 5,
**characterised in that**
the at least one baffle plate (10; 14, 15; 16) is mounted so as to be deformable and/or adjustable in position in such a way that the position of the stripping edge (12) relative to the conveyor belt (4) changes in dependence on the force exerted by the conveyed spreading material on the baffle plate (10; 14, 15; 16).

7. The spreading device according to claim 6,
**characterised in that**
the at least one baffle plate (10; 14, 15; 16) is elastically deformable.

8. The spreading device according to any one of claims 1 to 7,
**characterised in that**
the at least one baffle plate (10; 14, 15; 16) is inclined relative to the conveying direction of the belt conveyor.

9. The spreading device according to any one of claims 1 to 8,
**characterised in that** , the at least one baffle plate (10; 14, 15; 16) is bevelled in the region of the stripping edge (12).

10. The spreading device according to any one of claims 1 to 9,
**characterised in that**
the at least one baffle plate (10; 14, 15; 16) is arranged and/or designed asymmetrically with respect to the belt conveyor (2).

11. The spreading device according to claim 10,
**characterised in that**
the at least one baffle plate (16) extends over the whole width (b) of the belt conveyor (2), whereby it has a perforation (20) adjacent to the stripping edge (12).

12. The spreading device according to any one of claims 1 to 11,
**characterised in that**
the at least one baffle plate (16) has passage openings (21).

## Revendications

1. Dispositif d'épandage pour l'évacuation de produit d'épandage, comprenant un réservoir de produit d'épandage (1), un transporteur à courroie (2) disposé dans la zone formant fond du réservoir et s'étendant dans le sens longitudinal du réservoir, ainsi qu'un équipement doseur (7) disposé côté évacuation avec un tiroir de dosage (8) respectant un intervalle (h) par rapport à la bande transporteuse (4) du transporteur à courroie (2), du type selon lequel est prévue à l'intérieur du réservoir (1), en position éloignée par rapport à l'équipement doseur (7) et au-dessus du transporteur à courroie (2), au moins une plaque d'accumulation (10 ; 14, 15 ; 16) qui présente une arête inférieure de raclage (12) qui respecte, lors du fonctionnement du dispositif d'épandage et par rapport à la bande transporteuse (4) un intervalle plus petit que celui respecté par le tiroir de dosage (8),
**caractérisé en ce que**
l'arête inférieure de raclage (12) ne s'étend que sur, une partie de la largeur efficace (B) de la bande transporteuse (4).

2. Dispositif d'épandage selon la revendication 1,
**caractérisé en ce que**
il est précisément prévu une plaque d'accumulation (10 ; 16) dont l'arête inférieure de raclage (12) s'étend sur 50 à 75% de la largeur efficace (B) de la bande transporteuse (4).

3. Dispositif d'épandage selon la revendication 1 ou 2,
**caractérisé en ce que**
l'arête inférieure de raclage (12) respecte, lors du fonctionnement du dispositif d'épandage, un intervalle d'au moins 5 mm par rapport à la bande transporteuse (4).

4. Dispositif d'épandage selon l'une des revendications 1 à 3,
**caractérisé en ce que**
l'une au moins des plaques d'accumulation (10 ; 14, 15 ; 16) peut être ajustée selon des positions distinctes de base par rapport au transporteur à courroie (2).

5. Dispositif d'épandage selon l'une des revendications 1 à 4,
**caractérisé en ce que**
l'une au moins des plaques d'accumulation (10 ; 14, 15 ; 16) peut être pré-contrainte en direction de la bande transporteuse (4) avec une force de pré-contrainte indépendante de la charge du réservoir (1).

6. Dispositif d'épandage selon l'une des revendications 1 à 5,
**caractérisé en ce que**
l'une au moins des plaques d'accumulation (10 ; 14, 15 ; 16) est susceptible d'être conformée et/ou susceptible d'être disposée de telle sorte que la position de l'arête inférieure de raclage (12) par rapport à la bande transporteuse (4) varie en fonction de la force exercée sur la plaque d'accumulation (10 ; 14, 15 ; 16) par le produit d'épandage transporté.

7. Dispositif d'épandage selon la revendication 6,
**caractérisé en ce que**
l'une au moins des plaques d'accumulation (10 ; 14, 15 ; 16) est susceptible d'être conformée de manière élastique.

8. Dispositif d'épandage selon l'une des revendications 1 à 7,
**caractérisé en ce que**
l'une au moins des plaques d'accumulation (10 ; 14, 15 ; 16) est en position oblique ou inclinée par rapport au sens de défilement de la bande transporteuse (4).

9. Dispositif d'épandage selon l'une des revendications 1 à 8,
**caractérisé en ce que**
l'une au moins des plaques d'accumulation (10 ; 14, 15 ; 16) est à profil biseauté ou chanfreiné dans la zone de l'arête inférieure de raclage (12).

10. Dispositif d'épandage selon l'une des revendications 1 à 9,
**caractérisé en ce que**
l'une au moins des plaques d'accumulation (10 ; 14, 15 ; 16) est disposée et/ou réalisée de manière asymétrique par rapport au transporteur à courroie (2).

11. Dispositif d'épandage selon la revendication 10,
**caractérisé en ce que**
l'une au moins des plaques d'accumulation (16) s'étend sur l'ensemble de la largeur (b) du transporteur à courroie (2) et **en ce qu'**elle présente un évidement (20) au voisinage de l'arête inférieure de raclage (12).

12. Dispositif d'épandage selon l'une des revendications 1 à 11,
**caractérisé en ce que**
l'une au moins des plaques d'accumulation (16) présente des ouvertures de passage (21).
